(19) Europäisches Patentamt

European Patent Office

Office européen des brevets

(11) **EP 1 148 691 A1**

(12) **DEMANDE DE BREVET EUROPEEN**

(43) Date de publication:
**24.10.2001 Bulletin 2001/43**

(51) Int Cl.7: **H04L 29/06**

(21) Numéro de dépôt: **01400950.0**

(22) Date de dépôt: **12.04.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **18.04.2000 FR 0004984**

(71) Demandeur: **Airsys ATM S.A.**
**92220 Bagneux (FR)**

(72) Inventeur: **Baretzki, Laurent, c/o Thomson-CSF**
**94117 Arcueil Cedex (FR)**

(74) Mandataire: **Lucas, Laurent Jacques**
**Thomson-CSF**
**Propriété Intellectuelle**
**13, avenue du Président S. Allende**
**94117 Arcueil Cedex (FR)**

(54) **Routeur informatique à configuration dynamique**

(57)    La présente invention concerne un routeur informatique à configuration dynamique.

Le routeur comporte au moins un routeur générique (41) capable d'exécuter des routages entre des entrées ($I_n$, $I_3$) et des sorties ($O_1$, $O_4$), un fichier de configuration (42) comportant le paramétrage d'un ensemble donné de routages entre les entrées et les sorties et une table de routage, un sous-ensemble de routages ($R_1$, $R_2$ ...) étant chargé dans la table de routage par le routeur générique depuis le fichier de configuration (42), le routeur générique exécutant les routages entre les entrées et les sorties selon la configuration inscrite dans la table de routage.

L'invention s'applique notamment pour le traitement des informations de gestion de trafic aérien.

FIG.7

EP 1 148 691 A1

**Description**

La présente invention concerne un routeur informatique à configuration dynamique. Elle s'applique notamment pour le traitement des informations de gestion de trafic aérien. Plus généralement, elle s'applique pour tous systèmes de routage informatique mettant en jeu un grand nombre d'entrées et de sorties.

La densité de trafic aérien a atteint un niveau très important. Par ailleurs, les exigences de sécurité aériennes sont toujours de plus en plus accrues. Une conséquence de cette situation est que la gestion du trafic aérien doit traiter un grand nombre d'informations, destinées notamment aux contrôleurs aériens et aux pilotes d'avions. Ces informations sont en particulier relatives à une large catégorie de données radar, à des situations météorologiques, à des plans de vol ou encore à des données de type ILS concernant les systèmes d'atterrissage.

Le traitement de ces informations ne peut se faire que par des moyens informatiques puissants. Parmi ces moyens, un rôle essentiel est joué par les moyens d'interfaçage des différents centres d'informations ou de décisions. Ces moyens d'interfaçage ont notamment une fonction de routage des informations, ils ont donc notamment une fonction d'aiguillage des données vers les bons centres de destination. Etant donnés les flots très importants de données en jeu, ces moyens ont un rôle essentiel pour le bon fonctionnement global d'un système de gestion du trafic aérien. Les données traitées sont notamment les données radar et autres données relatives à la situation de vol des avions, telles que par exemple des plans de vol ou informations météorologiques.

Il existe des matériels connus et notamment disponibles dans le commerce, équipés de leurs systèmes d'exploitation, qui permettent de répondre à ces besoins de routage. A titre d'exemple, on peut citer une gamme de produits connus par la marque déposée LINES issue de l'expression anglo-saxonne « Link Interface Node for External Systems ». Ces produits, de type modulaire, sont conçus pour permettre le routage et le traitement de messages d'entrées/sorties parmi des lignes séries entrantes ou sortantes et Ethernet. Les lignes série standards telles que par exemple X25, HDLC ou BSC sont traitées aussi bien que des lignes dédiées, telles que par exemple des protocoles de transmissions d'informations radar particuliers.

Ces routeurs peuvent fonctionner avec une architecture logicielle de type à processeur frontal. Ils sont équipés d'un logiciel de type FPBSS, ce dernier terme étant issu de l'expression anglo-saxonne « Front Processor Basic System Software ». Dans ce mode de réalisation, le routeur est relié à un seul programme d'application. Il n'a qu'une fonction amont, par exemple l'aiguillage des données vers la bonne destination. Tout le coeur de l'applicatif est dans un ou plusieurs calculateurs centraux. En d'autres termes, il faut autant de routeurs que d'applicatifs.

Une utilisation plus performante de ces routeurs peut se faire selon un mode de communication ouvert, dit encore OCP selon l'expression anglo-saxonne « Open Communication Processor ». Dans ce mode, un routeur est relié à plusieurs applications et fonctionne sensiblement comme un serveur de données. Il permet notamment d'aiguiller et de traiter les données depuis n'importe quel point d'entrée vers n'importe quel point de sortie. Ce mode de fonctionnement est particulièrement bien adapté à la gestion du trafic aérien. Dans une application de gestion du contrôle aérien, ce mode permet en effet notamment les fonctionnalités suivantes, c'est-à-dire :

- une distribution du type boîte noire des données radar vers les centres, les données radar étant reçues par des interfaces séries et transmises via Ethernet vers un groupe de machines identifiées, diffusion encore appelée UDP multicast dans la littérature anglo-saxonne ;
- une conversion autonome de messages ou protocoles, permettant notamment la conversion de format de message ou protocoles spécifiques, ainsi par exemple ISR2 en ASTERIX, X25 en HDLC-UI... ;
- une fonction de déport des lignes dans les systèmes radar, c'est-à-dire la transmission de données radar par des lignes séries vers les circuits de traitement.

Un programme spécifique doit cependant être implanté dans ces routeurs fonctionnant en mode OCP pour assurer un interfaçage à toutes les entrées et sorties, vers ou depuis Ethernet ou des liaisons série. Ce programme spécifique est lié à l'application, par exemple la gestion du trafic aérien. Un problème est d'éviter de développer une nouvelle application de routage et de traitement :

- chaque fois qu'une nouvelle entrée et/ou sortie doit être configurée, par exemple une connexion TCP/IP ou une liaison asynchrone ;
- chaque fois qu'un routage spécifique doit être activé, par exemple le routage de tous les messages entrant depuis des liaisons asynchrones vers une connexion TCP/IP ;
- chaque fois qu'un programme dédié est requis, par exemple la suppression d'un octet de contrôle ou « checksum » d'un message de liaison asynchrone avant transmission vers une connexion TCP/IP.

Développer un nouveau programme à chacune des évolutions précitées et à d'autres encore, c'est-à-dire en fait à chaque besoin, rend le routeur non viable économiquement. Cela affecte aussi la maintenance et la qualité du système. Ce n'est donc pas une bonne solution industrielle.

Un but de l'invention est d'obtenir un système économique en permettant notamment à un routeur de répondre à une grande variété de besoins sans nécessiter de développements de programmes de routage et de traitement spécifiques. A cet effet, l'invention a pour objet un routeur informatique comportant au moins un routeur générique capable d'exécuter des routages entre des entrées et des sorties, un fichier de configuration comportant le paramétrage d'un ensemble donné de routages entre les entrées et les sorties et une table de routage. Un sous-ensemble de routage est chargé dans la table de routage par le routeur générique depuis le fichier de configuration, le routeur générique exécutant les routages entre les entrées et les sorties selon la configuration inscrite dans la table de routage.

Le sous-ensemble de routages est propre à un besoin donné (43). Au démarrage, le routeur générique active les entrées et sorties dédiées à l'application et charge la table de routage.

L'invention a pour principaux avantages qu'elle s'adapte à de nombreux types d'applications, qu'elle permet un traitement de situation d'« overflow » au niveau des sorties et qu'elle est simple à mettre en oeuvre.

D'autres caractéristiques et avantages de l'invention apparaîtront à l'aide de la description qui suit faite en regard de dessins annexés qui représentent :

- la figure 1, un exemple d'utilisation d'un système de routage de données en mode ouvert ;
- la figure 2, un exemple d'architecture logicielle d'un routeur selon la figure 1 ;
- la figure 3, un routeur reliant des lignes séries à des applicatifs ;
- la figure 4, une illustration du principe de fonctionnement d'un routeur selon l'invention ;
- la figure 5, un exemple d'architecture logicielle d'un routeur selon l'invention ;
- la figure 6, un exemple de table de routage utilisée par un routeur selon l'invention ;
- la figure 7, un autre mode de représentation d'un routeur selon l'invention mettant en évidence un exemple de routes et leurs fonctions associées.

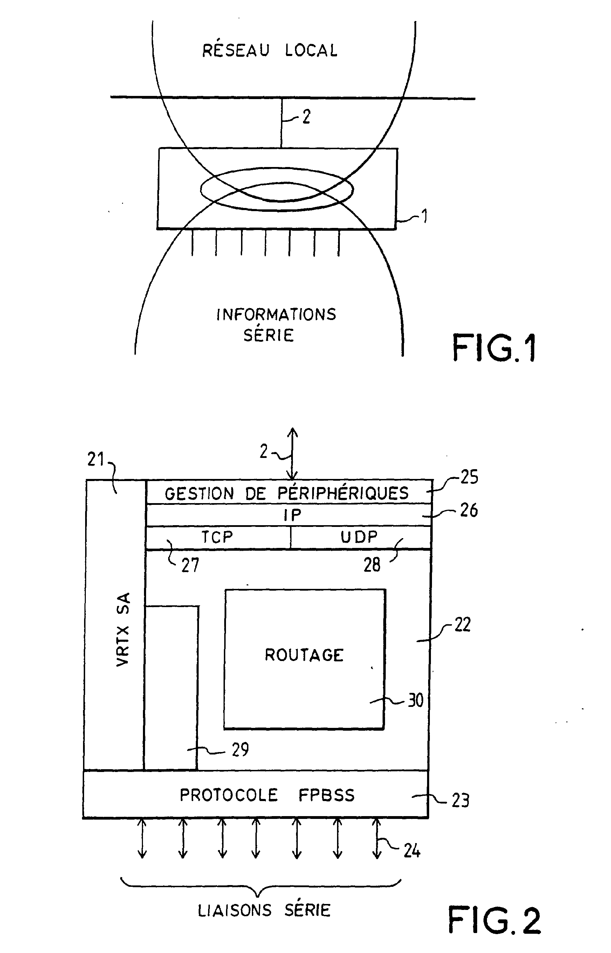

La figure 1 illustre un exemple d'utilisation d'un système de routage de données en mode ouvert. Un routeur 1 traite et aiguille des données fournies par des liaisons série, par exemple des données radar, vers une liaison Ethernet du type UDP multicast. Cette dernière transmet par exemple les données traitées par le routeur à un réseau d'information local, situé par exemple dans un centre de contrôle aérien.

La figure 2 illustre une architecture logicielle possible du routeur 1 fonctionnant en mode ouvert conformément à la figure 1. Le routeur comporte un système d'exploitation 21, par exemple du type VRTX SA, interagissant avec les différentes couches logicielles. Une couche logicielle intermédiaire 22, appelée dans la littérature anglo-saxonne « middleware », est ajoutée au système d'exploitation 21 pour fournir notamment des services tels que des communications inter-tâches, des gestions de temps ou des gestions de ressources. A cet effet, une bibliothèque de programmes de services 29 est implantée à l'intérieur de la couche intermédiaire. Cette couche 22 fait le lien entre les couches logicielles d'entrées/sorties, le système d'exploitation et l'applicatif. Une couche logicielle 23 assure le lien entre les liaisons série d'entrée 24 et la couche intermédiaire 22. Cette couche d'entrée 23 met par exemple en oeuvre les protocoles de communication de type FPBSS. Un empilement de couches logicielles 25, 26, 27, 28 assure le lien entre la liaison Ethernet 2 et la couche logicielle intermédiaire 22. Une couche externe 25 commande les périphériques de sortie. En dessous de cette couche, les autres couches logicielles 26, 27, 28 assurent différents protocoles de communications à destination du ou des périphériques de sortie. Une couche 26 exécute le protocole de communication Internet, encore appelé IP. Deux autres couches logicielles 27, 28, de niveau supérieur, exécutent les protocoles de communication TCP et UDP. Ces deux dernières couches 27, 28 sont en communication avec la couche intermédiaire 22.

Une application d'interfaçage spécifique 30, en fait un programme de routage, est implantée à l'intérieur de la couche intermédiaire 22. Cet applicatif assure un interfaçage commun pour accéder à n'importe quelle entrée ou sortie, qu'elle soit du type liaison série ou Ethernet. Cet applicatif lance notamment des demandes pour initialiser ou configurer les entrées/sorties, par exemple pour initialiser une connexion TCP/IP ou une connexion X25, et pour transmettre ou réceptionner des messages vers ou depuis les entrées/sorties selon un programme de routage prédéfini.

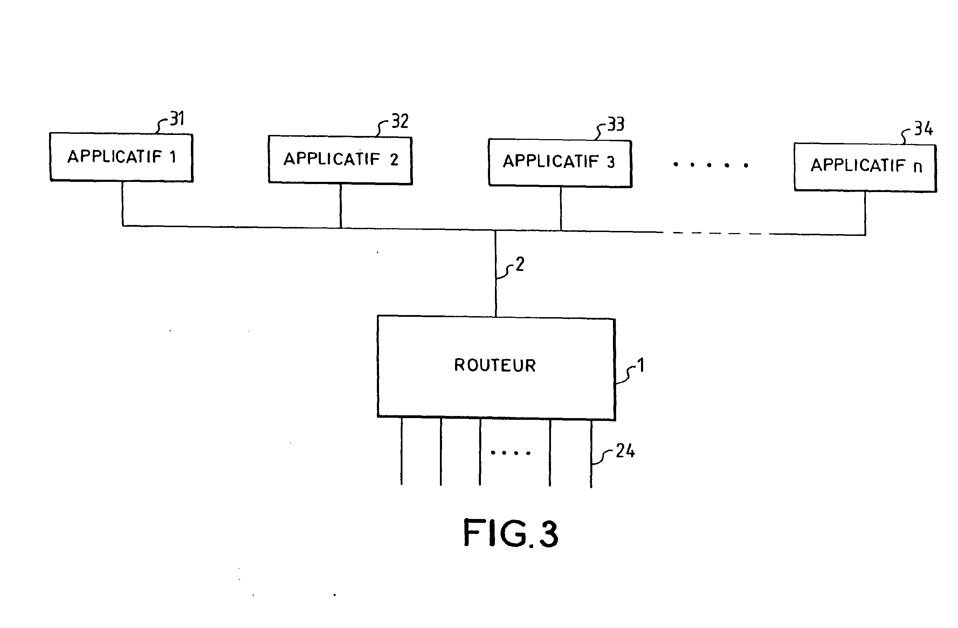

La figure 3 illustre, à titre d'exemple, un routeur 1 qui relie des lignes série 24 à des applicatifs 31, 32, 33, 34 via une liaison 2, par exemple du type Ethernet. Pour une configuration donnée, telle que celle illustrée par la figure 3, il y a un programme de routage 30 prédéfini. En cas de modification, et même de simple évolution de la configuration, il faut revoir ce programme de routage. Ce peut être notamment le cas si une nouvelle entrée ou sortie doit être configurée, telle que par exemple une entrée de données radars supplémentaire ou très spécifique, au protocole non standard. Le programme de routage 30 est encore à revoir lorsqu'un routage spécifique supplémentaire doit être activé, par exemple par suppression ou ajout d'un nouvel applicatif, ou qu'une application dédiée est requise. Ce peut être dans ce dernier cas la suppression d'un programme de vérification, par exemple du type « cheksum » pour une liaison asynchrone. Si on considère à titre d'exemple une configuration appliquée à la gestion de trafic aérien, il y a une multitude d'évolutions possible de cette configuration. Développer un nouveau programme de routage 30 à chacune de ces évolutions n'est pas économique. Cela pose par ailleurs un problème de maintenance et de fiabilité à cause du nombre d'évolutions de programmes en jeu.

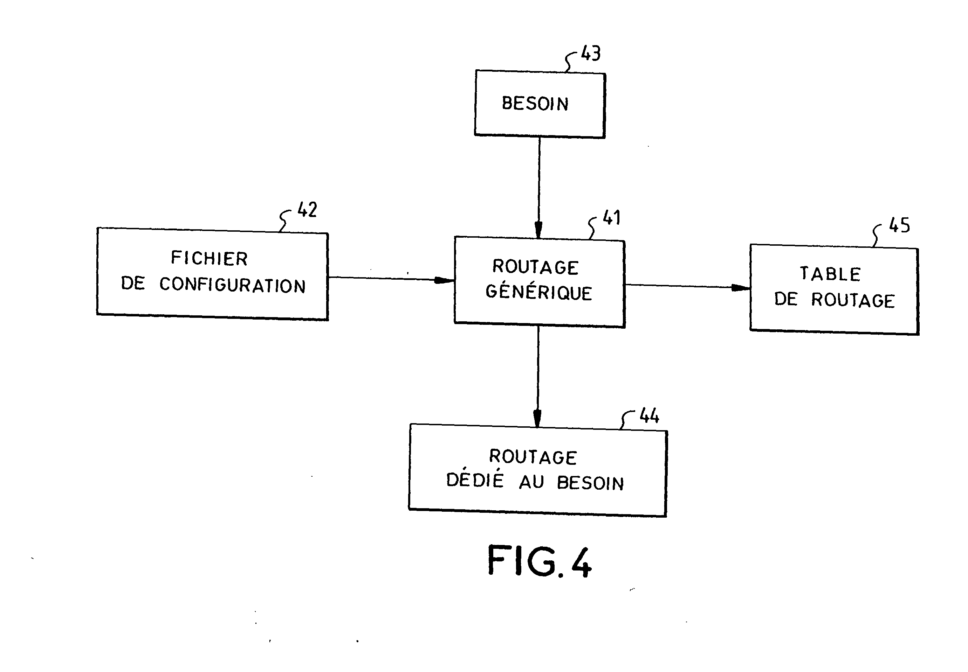

La figure 4 illustre par un synoptique, le principe de fonctionnement d'un routeur selon l'invention. Un tel routeur comporte un composant logiciel 41 qui exécute un programme de routage générique. Ce programme de routage générique est capable de traiter tous les types d'entrées et de sorties, plus particulièrement, il est capable d'exécuter de préférence tous les routages entre les entrées et les sorties. Quand le routeur démarre, le routeur générique 41, lit un fichier de configuration 42 préalablement chargé dans une mémoire. Ce fichier de configuration comporte le paramétrage d'un ensemble donné de routages, par exemple tous les routages possibles, entre les entrées et les sorties. Un routage définit une route, ou aiguillage de données, entre une entrée et une sortie. Aux différentes routes programmées dans le fichier de configuration, sont associées des fonctions, d'entrée et de sortie, que le routeur peut exécuter. En fonction du besoin 43 de l'application et du fichier de configuration 42, le routeur générique peut exécuter un ensemble de programmes de routages 30 propre à plusieurs besoins, éventuellement à une multitude de besoins.

Plus particulièrement, le routeur générique initialise au démarrage, ou après une remise à zéro ou « reset », toutes les entrées et sorties dédiées à une application, c'est-à-dire à un besoin, selon les paramètres de configuration. Il active en particulier les entrées et sorties utilisées pour l'application. Il remplit une table de routage 45 à partir du fichier de configuration. Plus précisément, le routeur générique exécute le chargement d'un sous-ensemble de routages depuis le fichier de configuration 42 vers la table de routage 45. Ce sousensemble est propre au besoin.

Une fois la phase d'initialisation et de configuration dédiée au besoin effectuée, le routeur attend les messages d'entrées. Le routeur exécute les routages entre les entrées et les sorties en fonction de la configuration inscrite dans la table de routage. En particulier, chaque message reçu par une entrée donnée est traité par une fonction associée à cette entrée, aiguillé selon la table de routage, traité par une fonction associée à la sortie sélectionnée, puis envoyée physiquement vers cette sortie. Les figures qui suivent illustrent ce fonctionnement.

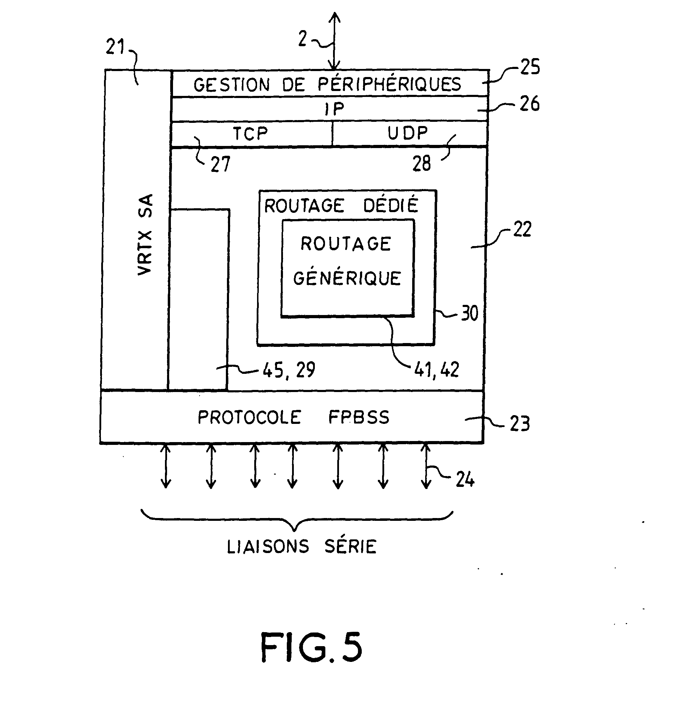

La figure 5 illustre un exemple d'architecture logicielle d'un routeur selon l'invention. L'architecture est proche de celle de la figure 2, mais le programme de routage dédié 30 exécute le programme de routage générique 41, lequel interagit avec la table de routage 45 et le fichier de configuration 42. Ce dernier est par exemple implanté dans la bibliothèque de services 29. Un besoin donné 43 exprime l'utilisation d'un ensemble d'entrées et de sorties, ainsi que l'utilisation des fonctions de traitement associées. Pour une gestion du trafic aérien, les entrées à activer sont par exemple des ports séries recevant des données radar, des données météo, des données de plan de vol. Les fonctions associées à ces entrées traitent par exemple du tri des messages, de leurs degrés de priorité, de leur validité ou encore de leur pertinence. A un besoin particulier d'une application de gestion de trafic aérien correspond donc la définition d'un ensemble d'entrées et de sorties à activer, des aiguillages de ces entrées vers ces sorties et des fonctions de traitement associées. Cette configuration est alors déchargée dans la table de routage 45, caractéristique du besoin. Le routeur générique 41 est donc un applicatif qui couvre une multitude de besoins, et qui se configure en fonction d'un besoin donné, en fait une application finale. A titre d'exemple, un routeur selon l'invention peut traiter de l'ordre d'une dizaine d'entrées/sorties. Pour le traitement d'un nombre plus important d'entrées/sorties, plusieurs routeurs peuvent être utilisés.

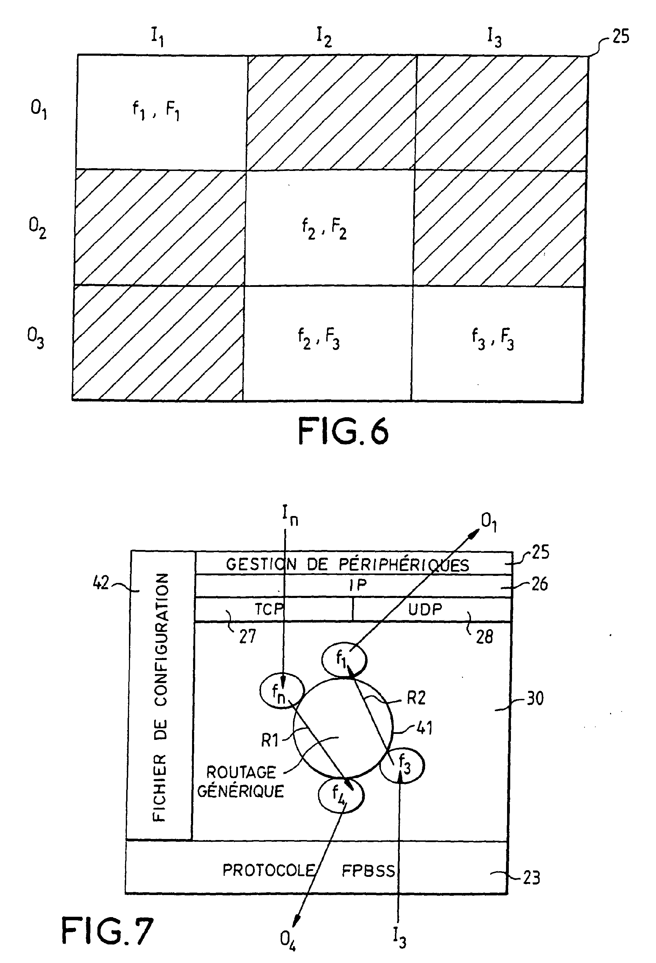

La figure 6 illustre à titre d'exemple une table de routage 25 exprimant les aiguillages entre trois entrées $I_1$, $I_2$, $I_3$ et trois sorties $O_1$, $O_2$, $O_3$. La table de routage est une table à deux entrées, $I_1$, $I_2$, $I_3$ étant en entrées de colonnes et $O_1$, $O_2$, $O_3$ en entrées de lignes. Les entrées de communication à activer sont par exemple des liaisons série X25, BSC, asynchrones, HDLC, « bit-stream » ou autres avec les paramètres standard ou dédiés du type par exemple de la vitesse de ligne, de la parité ou du mode électrique. Les sorties sont par exemple des points d'accès à Ethernet telles que par exemple des sorties UDP ou TCP, des adresses Internet, et des numéros de ports.

Les cases de la table qui sont hachurées indiquent qu'il n'y a pas de liaison entre les entrées et les sorties correspondantes. La table de la figure 6 définit ainsi les routes suivantes :

-   Route 1 = Entrée $I_1$ vers sortie $O_1$;
-   Route 2 = Entrée $I_2$ vers sortie $O_2$;
-   Route 3 = Entrée $I_2$ vers sortie $O_3$;
-   Route 4 = Entrée $I_3$ vers sortie $O_3$;

Pour la route 1, une fonction $f_1$ est affectée à l'entrée $I_1$ et une fonction $F_1$ est affectée à la sortie $O_1$. De même, des fonctions $f_2$, $F_2$, $f_3$, $F_3$ sont respectivement appliquées aux entrées/sorties $I_2$, $O_2$, $I_3$, $O_3$. Ces fonctions peuvent être par exemple des fonctions de contrôle d'intégrité des messages, des fonctions de tri ou de gestion des messages. Dans ce dernier cas, les fonctions gèrent par exemple priorité des messages. Tous autres types de traitements sont possibles. Une même fonction peut être affectée à plusieurs entrées ou sorties. Ainsi, la fonction $f_2$ peut par exemple être égale à la fonction $f_3$.

La figure 7 illustre par un autre mode de représentation, un routeur selon l'invention dans le cas où celui-ci traite par exemple deux simples routes, le système d'exploitation 21 et le logiciel intermédiaire n'étant pas représenté. Le routeur générique 41 peut par exemple traiter potentiellement N entrée $I_1$, $I_2$, ...$I_N$ et M sor-

ties $O_1$, $O_2$, ...$O_M$, avec des fonctions associées $f_1$, $f_2$, ... $f_P$. Dans l'exemple d'application illustré par la figure 7, seules les entrées $I_3$ et $I_n$ et les sorties $O_1$ et $O_4$ sont activées.

Ainsi, une première route $R_1$ relie une connexion TCP/IP $I_n$ avec une fonction $f_n$ à une sortie série $O_4$ avec un traitement par une fonction $f_4$. Une deuxième route $R_2$ relie une entrée série $I_3$ avec une fonction $f_3$ à un point d'accès UDP $O_1$ avec un traitement par une fonction $f_1$. Ces deux routes $R_1$, $R_2$ ainsi que les fonctions $f_1$, $f_3$, $f_4$, $f_n$ associées sont définies par la table de routage, elle-même chargée depuis le fichier de configuration 42 en fonction de l'application finale ou besoin.

Un routeur selon l'invention peut comporter des fonctions dédiées aux dépassements de capacités de traitement, encore appelés « overflows » dans la littérature anglo-saxonne. Il peut par exemple y avoir « overflow » lorsque trop de messages sont reçus sur une même entrée et routés sur une même sortie, en particulier lorsque la vitesse de ligne en sortie est inférieure à la vitesse de ligne en entrée ou encore lorsqu'un contrôle de flux est activé sur une des connexions. Une fonction de traitement de l'overflow apporte notamment une décision pour la transmission et la priorité de passage des messages en attente. Selon l'invention, plusieurs fonctions de traitement de l'overflow peuvent être définies selon les circonstances. Une fonction $F_{ov}$, appelée par la suite fonction d'overflow, est par exemple définie pour chaque route $R_z$, par la relation (1) suivante :

$$R_z = (\text{entrée } I_x \text{ vers sortie } O_y) \times F_{ov} \qquad (1)$$

La fonction $F_{ov}$ définit, pour la route $R_z$, la gestion de la situation d'overflow des messages transitant par cette route. Une première fonction $F_{ov}$ est adaptée pour le traitement des messages arrivant et routés selon une séquence donnée, par exemple les messages numérotés. En cas d'overflow, les derniers messages reçus sont rejetés jusqu'à ce que la situation d'overflow disparaisse. En d'autres termes, la fonction $F_{ov}$ privilégie d'envoyer les messages dans l'ordre de leur séquence sans pertes de messages à l'intérieur d'une séquence routée. Ainsi, si une séquence comporte cinq messages $m_1$, $m_2$, $m_3$, $m_4$, $m_5$, $F_{ov}$ empêche le routage vers la sortie du message $m_5$ tant que $m_4$ n'est pas disponible. Ce n'est pas l'aspect récent de l'information qui l'emporte ici, mais l'aspect séquentiel, complet et/ou exhaustif du message. Dans ce mode séquentiel, la fonction $F_{ov}$ laisse passer les messages selon la route $R_z$ ou les rejette. Ce type de fonction $F_{ov}$ est par exemple utilisé pour le routage des informations de plans de vol dans la gestion du trafic aérien. C'est le cas notamment lorsqu'un avion passe sous le contrôle d'un centre à un autre. Il est alors nécessaire d'envoyer les plans de vols dans l'ordre d'un centre de contrôle à un autre.

Une deuxième fonction de traitement d'overflow possible est plus particulièrement adaptée lorsque les informations les plus récentes ont un caractère important. C'est notamment le cas des données radar. A titre d'exemple, les systèmes de poursuite radar savent faire de l'anticipation ou de l'extrapolation de position de cibles. Pour cela, il faut de préférence avoir la dernière information de position d'un avion pour que l'extrapolation de sa position soit correcte, des données antérieures peuvent alors éventuellement ne pas être routées, et purement et simplement mises à l'écart. En tout état de cause, après une durée donnée, ces informations sont périmées. En cas d'overflow, la fonction $F_{ov}$ rejette les données reçues les plus anciennes au profit des données les plus récentes, qui sont routées selon la route $R_z$. Lorsque les données reçues sont des données radar, les données les plus récentes représentent en effet la couverture actuelle radar.

Une troisième fonction d'overflow possible effectue un contrôle de flux. Cette fonction peut par exemple être avantageusement utilisée pour des protocoles de communications TCP/IP ou X25. Si une sortie a atteint une situation d'overflow, la ou les entrées correspondantes sont bloquées jusqu'à ce que la situation redevienne normale. Cela permet notamment de réguler le flux de données dans le routeur. En d'autres termes, lorsqu'il y a trop de messages arrivant sur une sortie, la fonction $F_{ov}$ réduit le débit sur la route $R_z$. Plus particulièrement, elle envoie un message à la source de données pour qu'elle cesse l'envoi de messages, jusqu'à ce que la sortie ait pu émettre toutes ses données en attente.

Les fonctions d'overflow $F_{ov}$ se combinent aux fonctions $f_1$, $f_2$ ... associées aux entrées et sorties. Elles sont prévues dans le fichier de configuration 42 et déchargées le cas échéant dans la table de routage en fonction du besoin.

Un routeur selon l'invention est économique, car il peut répondre à une multitude de besoins avec très peu de modifications ou d'évolutions logicielles d'un besoin à l'autre. En particulier, le routeur générique 41 et le fichier de configuration 42 peuvent rester inchangés. Seul le logiciel intermédiaire 22, encore appelé « middleware » dans la littérature anglo-saxonne doit être modifié, notamment pour prendre en compte les paramètres relatifs aux besoins.

Un routeur selon l'invention peut être utilisé dans une configuration modulaire. A titre d'exemple, il est ainsi possible de prévoir un ou plusieurs routeurs dédiés au routage de données radar, un routeur dédié aux données de plans de vol, un autre routeur dédié aux données météorologiques, et éventuellement d'autres routeurs affectés à d'autres types de données.

Un routeur selon l'invention a été décrit pour une application de gestion de trafic aérien. Il peut être bien sûr utilisé pour d'autres types d'applications qui nécessitent le routage de données, dans des conditions économiquement avantageuses. En particulier, de nombreux types de données peuvent êtres routés dans un routeur selon l'invention, avec leurs protocoles associés, que ces derniers soient standards ou spécifiques.

## Revendications

1. Routeur informatique, **caractérisé en ce qu'**il comporte au moins un routeur générique (41) capable d'exécuter des routages entre des entrées ($I_1$, $I_2$, $I_3$...) et des sorties ($O_1$, $O_2$, $O_3$, ...), un fichier de configuration (42) comportant le paramétrage d'un ensemble donné de routages entre les entrées et les sorties et une table de routage (45), un sous-ensemble de routages ($R_1$, $R_2$ ...) étant chargé dans la table de routage par le routeur générique depuis le fichier de configuration (42), le routeur générique exécutant les routages entre les entrées et les sorties selon la configuration inscrite dans la table de routage.

2. Routeur selon la revendication 1, **caractérisé en ce que** le sous-ensemble de routages ($R_1$, $R_2$ ...) est propre à un besoin donné (43).

3. Routeur selon la revendication 2, **caractérisé en ce qu'**au démarrage, le routeur générique (41) active les entrées et sorties dédiées à l'application et charge la table de routage (45).

4. Routeur selon l'une quelconque des revendications précédentes, **caractérisé en ce que** des fonctions ($f_1$, ...$f_n$) de traitement des données sont associées aux différentes routes ($R_1$, $R_2$ ...), ces fonctions étant inscrites dans le fichier de configuration (42) et chargées dans la table de configuration (45).

5. Routeur selon la revendication 4, **caractérisé en ce qu'**un message reçu par une entrée donnée ($I_1$) est traité par une fonction ($f_1$) associée à cette entrée, aiguillé selon la table de routage (45) et traité par une fonction ($f_2$) associée à la sortie sélectionnée ($O_2$).

6. Routeur selon l'une quelconque des revendications précédentes, **caractérisé en ce qu'**il comporte un système d'exploitation (21), des couches logicielles d'entrées et de sorties (23, 25, 26, 27, 28) et une couche logicielle intermédiaire (22), la couche logicielle intermédiaire assurant le lien entre le système d'exploitation, les couches d'entrées et de sorties et le routeur générique (41).

7. Routeur selon l'une quelconque des revendications précédentes, **caractérisé en ce que** les entrées et sorties sont connectées à des liaisons série X25, BSC, asynchrones, HDLC ou à des liaisons Ethernet du type UDP ou TCP.

8. Routeur selon l'une quelconque des revendications précédentes, **caractérisé en ce que**, les messages étant routés selon une séquence donnée, il comporte une fonction ($F_{ov}$) dédiée au dépassement de capacités de traitement du routeur générique, cette fonction rejetant les derniers messages reçus jusqu'à ce que la situation de dépassement disparaisse, de sorte que les messages soient routés dans l'ordre de leur séquence sans perte de message à l'intérieur d'une séquence routée.

9. Routeur selon l'une quelconque des revendications précédentes, **caractérisé en ce qu'**il comporte une fonction ($F_{ov}$) dédiée au dépassement de capacités de traitement du routeur générique, cette fonction rejetant les données les plus anciennes au profit des donnés les plus récentes, ces dernières étant routées vers la sortie.

10. Routeur selon l'une quelconque des revendications précédentes, **caractérisé en ce qu'**il comporte une fonction ($F_{ov}$) dédiée au dépassement de capacités de traitement du routeur générique, cette fonction réduisant le débit sur la route, en envoyant un message à la source de données pour qu'elle cesse l'envoi de message jusqu'à ce que la situation de dépassement disparaisse.

11. Routeur selon l'une quelconque des revendications précédentes, **caractérisé en ce que** les données routées sont relatives à une application de gestion de contrôle aérien.

12. Routeur selon l'une quelconque des revendications précédentes, **caractérisé en ce que** les données routées sont des données radar.

13. Routeur selon l'une quelconque des revendications précédentes, **caractérisé en ce que** les données routées sont des données météorologiques.

14. Routeur selon l'une quelconque des revendications précédentes, **caractérisé en ce que** les données routées sont des données de plans de vols.

RÉSEAU LOCAL

INFORMATIONS SÉRIE

FIG.1

GESTION DE PÉRIPHÉRIQUES

IP

TCP | UDP

VRTX SA

ROUTAGE

PROTOCOLE FPBSS

LIAISONS SÉRIE

FIG.2

EP 1 148 691 A1

APPLICATIF 1 _31

APPLICATIF 2 _32

APPLICATIF 3 _33

. . . . .

APPLICATIF n _34

_2

ROUTEUR _1

. . . .  _24

# FIG.3

FIG.4

EP 1 148 691 A1

FIG.5

Table grid (FIG.6):

|  | $I_1$ | $I_2$ | $I_3$ | 25 |
|---|---|---|---|---|
| $O_1$ | $f_1 , F_1$ | | | |
| $O_2$ | | $f_2 , F_2$ | | |
| $O_3$ | | $f_2 , F_3$ | $f_3 , F_3$ | |

## FIG.6

$I_n$ → / → $O_1$

GESTION DE PÉRIPHÉRIQUES — 25

IP — 26

TCP | UDP

27 | 28 — 30

42 — FICHIER DE CONFIGURATION

$f_1$

$f_n$

R2

R1

41

$f_3$

ROUTAGE GÉNÉRIQUE

$f_4$

PROTOCOLE FPBSS — 23

$O_4$        $I_3$

## FIG.7

**Office européen des brevets**

## RAPPORT DE RECHERCHE EUROPEENNE

Numéro de la demande

EP 01 40 0950

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 758 925 A (SEXTANT AVIONIQUE SA) 31 juillet 1998 (1998-07-31) * page 5, ligne 3 - page 6, ligne 2; figure 1 * | 1,2,11, 12,14 | H04L29/06 |
| A | WO 97 49214 A (NETSYS TECHNOLOGIES INC) 24 décembre 1997 (1997-12-24) * page 22, ligne 9 - ligne 21; figures 2,5,6A,6B * | 1,6,7 | |
| P,A | EP 1 039 761 A (SAGEM SA) 27 septembre 2000 (2000-09-27) * colonne 2, ligne 58 - colonne 4, ligne 5; figures 1,2 * | 1,4,5,7, 13 | |
| P,A | WO 00 30322 A (SUN MICROSYSTEMS INC.) 25 mai 2000 (2000-05-25) * page 10, ligne 4 - page 11, ligne 27; figures 1,4,7 * | 1,7,8 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| BERLIN | 28 mai 2001 | Taylor, P |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 01 40 0950

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-05-2001

| Document brevet cité au rapport de recherche | | Date de publication | Membre(s) de la famille de brevet(s) | | Date de publication |
|---|---|---|---|---|---|
| FR 2758925 | A | 31-07-1998 | CN<br>EP<br>WO | 1248369 T<br>0956682 A<br>9833305 A | 22-03-2000<br>17-11-1999<br>30-07-1998 |
| WO 9749214 | A | 24-12-1997 | AU | 6394096 A | 07-01-1998 |
| EP 1039761 | A | 27-09-2000 | FR | 2791209 A | 22-09-2000 |
| WO 0030322 | A | 25-05-2000 | AU | 1725300 A | 05-06-2000 |

EPO FORM P0460